# EUROPEAN PATENT SPECIFICATION

(11) **EP 2 957 388 B1**
(45) Date of publication and mention of the grant of the patent: **31.05.2017**
(21) Application number: 14425080.0
(22) Date of filing: 20.06.2014
(51) Int. Cl.: B24C 3/18, B24C 3/26, B24C 9/00, B24C 1/00

(54) **Peeling device, in particular for dried fruits**
Schälvorrichtung, insbesondere für Trockenfrüchte
Dispositif de décorticage, en particulier pour fruits secs

(43) Date of publication of application: 23.12.2015
(73) Proprietor: Domenico de Lucia S.p.A., 81027 San Felice a Cancello (CE) (IT)
(72) Inventor: De Lucia, Pasquale, 81027 San Felice a Cancello (CE) (IT)
(74) Representative: Giugni, Diego

(56) References cited:
- WO-A1-2008/087544
- GB-A- 2 095 538

## Description

The present invention relates to a peeling device, in particular for dried fruits. The device is primarily useful for dried chestnuts.

The current production of dried, peeled chestnuts is limited by the efficiency of conventional peeling systems that fail to remove the pellicle, i.e. the suede color coating that covers the chestnut under its peel and can also penetrate into the mass of the fruit. When the pellicle remains wholly or in part, exceeding the extent permitted by law, a batch of dried chestnuts is downgraded that are defined bad peeled and are destined to secondary productions such as flour, having lower organoleptic qualities, with considerable loss of business for a manufacturer.

The invention aims in particular to the recovery of dried bad peeled chestnuts by the removal of their pellicle by a jet of compressed air dragging dry ice. GB 2 095 538, on which the preamble of claim 1 is based, shows a peeling device which uses a nozzle from which ice particles entrained in a gas flow are discharged against a fruit or vegetable to be peeled.

Already the international patent application WO2008/087544 A1 discloses a method and a device for treatment of a surface. The device includes a source of gaseous carbon dioxide, a source of a pressurized carrier gas containing ozone and a unit communicating with said sources that is configured and adapted to produce solid carbon dioxide entrained in the flow of gaseous carbon dioxide and carrier gas. Then pellets of carbon dioxide are produced from carbon dioxide gas supplied from said source. The fields of use of this treatment are mentioned only at page 6 lines 1-5 where it is also provided that foodstuffs are subjected to a surface treatment. It should be understood that the patent application WO2008/087544 A1 proves that in the past, jets of dry ice pellets were used on foods, although only generically.

US-8,491,354 discloses a device for shooting dry ice comprising a flow passage for a carrier gas terminating with an ejector and a pipe for liquid carbon dioxide flowing into an expansion chamber concentrically formed with the flow passage. The expansion and evaporation of a part of the liquid carbon dioxide in the expansion chamber produces an evaporative cooling so that another part of the carbon dioxide condenses to form solid dry ice acting as an inert transported together with the carrier gas and accelerated in the ejector. As US-8,491,354 says, the device is able to remove efficiently and delicately, surface incrustations. Cleaning effect depends mainly on number, size and speed of the particles of carbon dioxide.

Already US-4,038,786 discloses a sandblasting with pellets of a material capable of sublimation, in particular solid carbon dioxide or dry ice particles or pellets used to facilitate the removal of an organic coating by abrading the coating and exerting a solvent action to facilitate the breakup thereof.

In view of the prior art, an object of the present invention is to provide a device for peeling dried fruits using one of the known methods of production and ejection of dry ice pellets by applying it to the particular type of fruit.

Another object of the present invention is to combine a device for peeling dried fruits with a conveyor of the same.

To achieve the objects indicated above, the invention provides a peeling device, particularly for dried fruits, by means of a gas jet which drags dry ice particles in a flow passage terminating with an ejector having an orifice, the device comprising a peeling chamber extending along a longitudinal axis, the chamber being provided with a lateral connection for receiving said orifice and with opposite open ends, and a singulator suitable for carrying longitudinally in succession dried fruits to be peeled along said peeling chamber through said open ends.

Advantageously, said peeling chamber has a tubular profile with a curve cross section larger than the maximum size of the dried fruits, the tubular profile having a lower part in which a C-shaped groove is made.

The singulator is generally a conveyor belt, which extends into the C-shaped groove of the tubular profile of the peeling chamber and is provided with a succession of perforated partitions similar to washers, spaced from one another in a manner that the space between a partition and the next one is sufficient to contain a dry fruit to be peeled.

These and other features and advantages of the present invention will become more apparent from the indicative, and therefore non-limiting, description of an embodiment of a peeling device for dry fruits, in particular chestnuts, as illustrated in the accompanying drawings in which:
- Figure 1 is a side view of an ejector of the peeling device for dried fruits, in particular chestnuts, according to the present invention;
- Figure 2 is an enlarged end view of the ejector in Figure 1;
- Figure 3 is a partial perspective view of a combination of the ejector together with a chestnut peeling room and a singulator according to the present invention;
- Figure 4 is a perspective view of the peeling chamber and the singulator in Figure 3 shown from above.

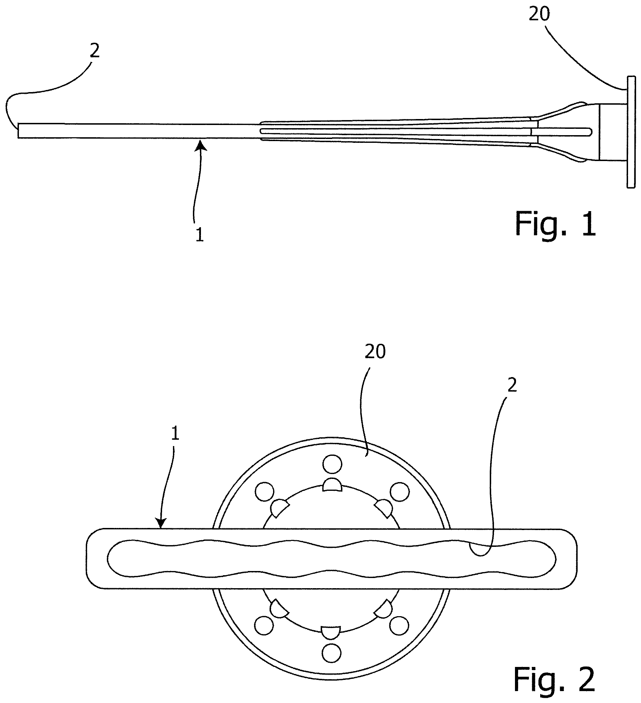

First, reference is made to Figures 1 and 2, which are a side view and an enlarged end view, respectively, of an ejector 1 of the peeling device according to the present invention configured for dried fruits, hereinafter cited only as dried chestnuts. The ejector 1 feeds a gas jet dragging dry ice particles from a flange 20 up to an orifice 2. The orifice 2 of the ejector 1 has a section shaped according to a sinusoidal profile which serves to ensure a better distribution of particles and to avoid the clogging of the orifice 2. The method of production of dry ice particles is not described, as anyone of those known in the art can be used.

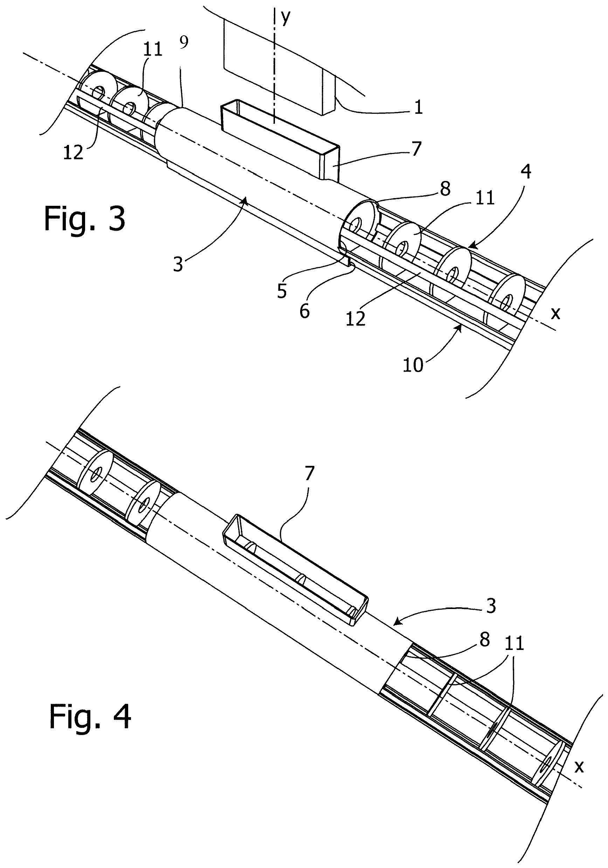

Reference is made now to Figures 3 and 4, which are perspective views of the combination of the ejector, shown only partially, with a peeling chamber 3 of dried chestnuts in the peeling device according to the present invention, and respectively of the peeling chamber 3 together to a singulator 4 shown only partially.

The peeling chamber 3 extends mainly in the direction of advancement of the chestnuts along a longitudinal axis x. The peeling chamber 3 has a tubular profile with a curve cross section larger than the maximum size of the dried chestnuts to be peeled. Suitably, the tubular profile is obtained, essentially, by a circular portion 5 combined with a C-shaped groove 6 in its lower part.

The peeling chamber 3 is provided with a side connection 7 adapted to receive the orifice 2 of the ejector 1 and is provided with opposite open ends 8, 9 along its longitudinal axis x. The side fitting 7 has a longitudinal axis y offset with respect to the longitudinal axis x of the peeling chamber 3.

The singulator 4 is adapted to carry in succession longitudinally dried chestnuts to be peeled in the peeling chamber 3 through the open ends 8, 9. The singulator 4 is generally a conveyor belt 10 advancing in the C-shaped groove 6 of the tubular profile of the peeling room 3. The conveyor belt 10, driven by means not shown, is provided with a succession of perforated partitions, generally indicated as 11, spaced from one another in a manner that the space between a perforated partition 11 and the next one is sufficient to contain a dry fruit to be peeled. Both upstream and downstream of the peeling chamber 3, the conveyor belt 10 is provided with a protective cage 12 to prevent the fall of the dried chestnuts to be peeled from the succession of perforated partitions 11. The singulator 4 receives the dried chestnuts to be peeled from a hopper not shown.

As can be understood from the foregoing, the peeling device according to the invention is based on the combination of the singulator 4, which separates one by one the chestnuts from the hopper, and of the peeling chamber 3 where a jet of compressed air and dry ice particles hits tangentially the dried chestnuts to be peeled by abrading their pellicle. The jet is received from the orifice 2 of the ejector 1 through the side connection 7 of the peeling room.

Downstream of the peeling chamber 3 the dried peeled chestnuts are unloaded onto a sorting belt in order to assess their quality.

The speed of the singulator is adjustable to allow for modifications depending on the nature of the product and the degree of cleaning to be obtained.

The orifice 2 and, consequently, the side connection 7 have an elongated shape so that the abrasive jet can invest simultaneously more positions on the conveyor, and then simultaneously more chestnuts. The longitudinal axis y of the side connection 7 does not intersect the longitudinal axis x of the peeling chamber 3, but is offset with respect to it. Therefore, the abrasive jet does not hit frontally, but laterally, each dried chestnut and impresses a tangential thrust which triggers a rotary motion, approximately about its own axis, so as to exhibit all the surface to be treated of the dried chestnut, in crossing the peeling chamber 3. Residues of pellicle are removed through the open ends 8, 9 of the peeling chamber 3 and then collected in a container thereof.

The shape of the ejector 1 is designed to work safely and to avoid dispersion of the dry ice particles. The ejector has a flange 20 for the connection with a dry ice supply machine, and is flattened toward the orifice 2 having a rectangular shape corresponding to the cutout made in the side connection 7 of the peeling chamber 3. The shape change of the ejector from circular to rectangular and the ratio between the sides of the orifice in the order of 10 aim to make minimum the sublimation of the dry ice particles at the moment of their impact with the walls of the ejector itself, with the consequence of increasing the yield of the abrasive jet.

It is understood that many modifications and variations may be made to the embodiment of the present invention described above without departing from its scope of protection defined in the appended claims.

## Claims

1. A peeling device, in particular of dried fruits, by means of a gas jet dragging ice particles in a flow passage terminating with an ejector (1) having an orifice (2), whereby the peeling device comprises a peeling chamber (3) extending along a longitudinal axis (x), provided with a side connection (7) for receiving said orifice (2) and having opposite open ends (8, 9), **characterised by** the gas jet dragging dry ice particles, the side connection (7) having a longitudinal axis (y) offset with respect to the longitudinal axis (x) of the peeling chamber (3), and a singulator (4) suitable for carrying in succession dried fruits to be peeled for their advancement along said longitudinal axis (x) of the peeling chamber (3) through said opposite open ends (8,9).

2. The peeling device according to claim 1, wherein said peeling chamber (3) has a tubular profile with a cross section that combines a circular portion (5) larger than the maximum size of the dried fruits, and a C-shaped groove (6).

3. The peeling device according to claim 2, wherein said singulator (4) consists of a conveyor belt (10) advancing in the C-shaped groove (6) of the tubular profile of the peeling chamber (3).

4. The peeling device according to claim 3, wherein the conveyor belt (10) is provided with a succession of perforated partitions (11) spaced from one another in a manner that the space between a perforated partition (11) and the next one is enough to contain a dry fruit to be peeled.

5. The peeling device according to claim 1, wherein said side connection (7) has a longitudinal axis (y) being offset with respect to said longitudinal axis (x) of the peeling chamber (3).

6. The peeling device according to claim 1, wherein said singulator (4) receives the dried fruits from a hopper.

7. The peeling device according to claim 1, wherein the orifice (2) of the ejector (1) has a section shaped according to a sinusoidal profile.

8. The peeling device according to claim 4, wherein the conveyor belt (10) is provided with a protective cage (12) upstream and downstream of the peeling chamber (3), to prevent the fall of the dried fruits to be peeled from the succession of perforated partitions (11).

## Patentansprüche

1. Vorrichtung zum Schälen insbesondere von Trockenfrüchten mittels eines Eispartikel mitreißenden Gasstrahls in einem Strömungsweg, der mit einem Auswerfer (1) mit einer Mündungsöffnung (2) endet, wodurch die Schälvorrichtung eine Schälkammer (3) aufweist, die sich entlang einer Längsachse (x) erstreckt, die mit einer seitlichen Verbindung (7) zur Aufnahme der Mündungsöffnung (2) versehen ist und gegenüber liegende offene Enden (8, 9) aufweist, **gekennzeichnet durch** den trockene Eispartikel mitreißenden Gasstrahl, wobei die seitliche Verbindung (7) eine bezüglich der Längsachse (x) der Schälkammer (3) versetzte Längsachse (y) aufweist, und eine Vereinzelungseinrichtung (4), die geeignet ist, um zu schälende Trockenfrüchte nacheinander für deren Förderung entlang der Längsachse (x) der Schälkammer (3) durch die gegenüber liegenden offenen Enden (8, 9) zu transportieren.

2. Schälvorrichtung nach Anspruch 1, wobei die Schälkammer (3) ein rohrförmiges Profil mit einem Querschnitt aufweist, der einen kreisförmigen Abschnitt (5) größer als die maximale Größe der Trockenfrüchte und eine C-förmige Ausnehmung (6) kombiniert.

3. Schälvorrichtung nach Anspruch 2, wobei die Vereinzelungseinrichtung (4) aus einem Förderband (10) besteht, das sich in der C-förmigen Ausnehmung (6) des rohrförmigen Profils der Schälkammer (3) vorwärtsbewegt.

4. Schälvorrichtung nach Anspruch 3, wobei das Förderband (10) mit einer Reihe von durchbrochenen Querwänden (11) versehen ist, die im Abstand voneinander derart angeordnet sind, dass der Raum zwischen einer durchbrochenen Querwand (11) und der nächsten ausreichend ist, um eine zu schälende Trockenfrucht aufzunehmen.

5. Schälvorrichtung nach Anspruch 1, wobei die seitliche Verbindung (7) eine Längsachse (y) aufweist, die bezüglich der Längsachse (x) der Schälkammer (3) versetzt ist.

6. Schälvorrichtung nach Anspruch 1, wobei die Vereinzelungseinrichtung (4) die Trockenfrüchte aus einem Fülltrichter aufnimmt.

7. Schälvorrichtung nach Anspruch 1, wobei die Mündungsöffnung (2) des Auswerfers (1) einen entsprechend einem sinusförmigen Profil geformten Querschnitt aufweist.

8. Schälvorrichtung nach Anspruch 4, wobei das Förderband (10) oberhalb und unterhalb der Schälkammer (3) mit einem Schutzkäfig (12) versehen ist, um das Fallen der zu schälenden Trockenfrüchte aus der Reihe durchbrochener Querwände (11) zu verhindern.

## Revendications

1. Dispositif d'épluchage, en particulier de fruits séchés, au moyen d'un jet de gaz entraînant des particules de glace dans un passage d'écoulement se terminant par un éjecteur (1) présentant un orifice (2), dans lequel le dispositif d'épluchage comprend une chambre d'épluchage (3) s'étendant le long d'un axe longitudinal (x), munie d'une liaison latérale (7) pour recevoir ledit orifice (2) et ayant des extrémités ouvertes opposées (8, 9), **caractérisé en ce que** le jet de gaz entraîne des particules de glace sèche et **en ce que** la liaison latérale (7) a un axe longitudinal (y) décalé par rapport à l'axe longitudinal (x) de la chambre d'épluchage (3), et un séparateur (4) apte à transporter des fruits séchés à éplucher en succession pour leur avancement le long dudit axe longitudinal (x) de la chambre d'épluchage (3) à travers lesdites extrémités ouvertes opposées (8, 9).

2. Dispositif d'épluchage selon la revendication 1, dans lequel ladite chambre d'épluchage (3) présente un profil tubulaire de section transversale qui combine une portion circulaire (5) plus grande que la dimension maximale des fruits séchés, et une rainure en forme de C (6).

3. Dispositif d'épluchage selon la revendication 2, dans lequel ledit séparateur (4) consiste en un convoyeur à courroie (10) avançant dans la rainure en forme de C (6) du profil tubulaire de la chambre d'épluchage (3).

4. Dispositif d'épluchage selon la revendication 3, dans lequel le convoyeur à courroie (10) est pourvu d'une succession de cloisons perforées (11) espacées l'une de l'autre de manière à ce que l'espace entre une cloison perforée (11) et la cloison suivante est suffisant pour contenir un fruit sec à éplucher.

5. Dispositif d'épluchage selon la revendication 1, dans lequel ladite liaison latérale (7) présente un axe longitudinal (y) décalé par rapport audit axe longitudinal (x) de la chambre d'épluchage (3).

6. Dispositif d'épluchage selon la revendication 1, dans lequel ledit séparateur (4) reçoit les fruits séchés d'une trémie.

7. Dispositif d'épluchage selon la revendication 1, dans lequel l'orifice (2) de l'éjecteur (1) présente une section formée selon un profil sinusoïdal.

8. Dispositif d'épluchage selon la revendication 4, dans lequel le convoyeur à courroie (10) est pourvu d'une cage de protection (12) en amont et en aval de la chambre d'épluchage (3) pour empêcher la chute des fruits secs à éplucher de la succession de cloisons perforées (11).
